# EUROPÄISCHE PATENTSCHRIFT

(11) **EP 3 015 755 B1**
(45) Veröffentlichungstag und Bekanntmachung des Hinweises auf die Patenterteilung: **03.05.2017**
(21) Anmeldenummer: 14190819.4
(22) Anmeldetag: 29.10.2014
(51) Int. Cl.: F16P 3/08, G05B 9/03

(54) **RFID-Element, RFID-Sender/Empfänger-System sowie Sicherheitsschalter**
RFID element, RFID transmitter/reception system and safety switch
Élément RFID, système d'émetteur/récepteur RFID ainsi que commutateur de sécurité

(43) Veröffentlichungstag der Anmeldung: 04.05.2016
(73) Patentinhaber: SICK AG, 79183 Waldkirch (DE)
(72) Erfinder: Schwarz, Adrian, 79183 Waldkirch (DE)
(74) Vertreter: Rieger, Daniel-Stephan

(56) Entgegenhaltungen:
- EP-A2- 2 637 067
- DE-A1-102012 109 311

## Beschreibung

Die vorliegende Erfindung betrifft einen Sicherheitsbetätigungssensor mit einem Sensorelement, mit einer Auswerteeinheit und mit mindestens einem Betätigerelement, wobei der Sicherheitsbetätigungssensor zwei Sicherheitsausgänge aufweist, die mit einer Sicherheitssteuerung verbunden sind, wobei die Auswerteeinheit dazu ausgebildet ist, abhängig von der Detektion des Betätigerelements auf jedem der zwei Sicherheitsausgänge ein Betätigungssignal auszugeben.

Die EP 2 637 067 A2 offenbart eine Sensoranordnung, die in der Lage ist, drei verschiedene Betätiger anhand der entsprechenden Eingangssignale zu erkennen und in Abhängigkeit davon verschiedene Signalpaare an den Anschlusspins zu erzeugen. Dieses Dokument offenbart den Oberbegriff von Anspruch 1. Die DE 10 2012 109 311 A1 offenbart eine Vorrichtung zum sicheren Überwachen einer Schließposition zweier relativ zueinander beweglicher Teile. Die Vorrichtung besitzt einen Betätiger und einen Sensor.

Eine Aufgabe der Erfindung besteht darin, einen verbesserten Sicherheitsbetätigungssensor bereitzustellen, der vielseitiger einsetzbar ist. Weiter soll die Sicherheitssteuerung in der Lage sein, Informationen über das Betätigerelement von dem Sicherheitsbetätigungssensor zu erhalten und weiterzuverarbeiten. Die Erfindung ist Gegenstand des Anspruchs 1. Die Aufgabe wird gelöst mit einem Sicherheitsbetätigungssensor mit einem Sensorelement, mit einer Auswerteeinheit und mit mindestens einem Betätigerelement, wobei der Sicherheitsbetätigungssensor zwei Sicherheitsausgänge aufweist, die mit einer Sicherheitssteuerung verbunden sind, wobei die Auswerteeinheit dazu ausgebildet ist, abhängig von der Detektion des Betätigerelements durch das Sensorelement auf jedem der zwei Sicherheitsausgänge jeweils ein Betätigungssignal auszugeben, wobei die Auswerteeinheit dazu ausgebildet ist, unterschiedliche Betätigerelemente zu detektieren, die Auswerteeinheit dazu ausgebildet ist, die unterschiedlichen Betätigerelemente zu unterscheiden, und die Auswerteeinheit dazu ausgebildet ist, auf jedem der zwei Sicherheitsausgänge abhängig von dem detektierten Betätigerelement jeweils zusätzlich Frequenzsignale mit Frequenzen auszugeben.

Gemäß der Erfindung ist die Auswerteeinheit dazu ausgebildet, unterschiedliche Betätigerelemente zu detektieren. Die Betätigerelemente weisen beispielsweise jeweils eine individuelle Kennung bzw. Kodierung auf, wodurch die Betätigerelemente unterschieden werden können. Die Auswerteeinheit kann die unterschiedlichen Kennungen bzw. Kodierungen auswerten, und die erfassten Kodierungen den jeweiligen Betätigerelementen zuordnen.

Dadurch, dass die Auswerteeinheit dazu ausgebildet ist, auf jedem der zwei Sicherheitsausgänge abhängig von dem detektierten Betätigerelement zusätzlich Frequenzsignale mit insbesondere unterschiedlichen Frequenzen auszugeben, ist es möglich auf den lediglich zwei Sicherheitsausgängen zusätzlich die Information, in Form der beispielsweisen unterschiedlichen Frequenzen, zu übertragen, welches Betätigerelement denn gerade detektiert wurde. Dadurch wird ein zusätzlicher Ausgang eingespart. Um den Sicherheitsbetätigungssensor besonders sicher auszuführen, werden auf den Sicherheitsausgängen optional nur unterschiedliche Frequenzen ausgegeben. Dadurch wird beispielsweise ein Querschluss zwischen den Sicherheitsausgängen detektierbar.

Die Sicherheitsausgänge des Sicherheitsbetätigungssensors sind mit Eingängen der Sicherheitssteuerung verbunden. Die Sicherheitssteuerung ist dazu ausgebildet, die Betätigungssignale auszuwerten. Abhängig von den Betätigungssignalen kann beispielsweise eine gefahrbringende Bewegung einer Maschine gestoppt werden.

Weiter ist die Sicherheitssteuerung dazu ausgebildet, die Frequenzsignale auszuwerten. Aufgrund der insbesondere unterschiedlichen Frequenzsignale ist die Sicherheitssteuerung in der Lage, die unterschiedlichen Betätigerelemente zu erkennen und daraufhin unterschiedliche Reaktionen auszulösen. Beispielsweise kann bei der Erkennung eines ersten Betätigerelements eine gefahrbringende Bewegung verlangsamt werden und bei der Erkennung eines zweiten Betätigerelements die gefahrbringende Bewegung gestoppt oder freigegeben werden.

Beispielsweise sind die unterschiedlichen Betätigerelemente an unterschiedlichen Positionen entlang eines Tores oder einer Linearachse angeordnet. Von dem Sicherheitsbetätigungssensor werden die unterschiedlichen Betätigerelemente während des Öffnens oder Schließens des Tores bzw. des Verfahrens der Linearachse nacheinander detektiert. Aufgrund der Unterscheidung der Betätigerelemente durch die Auswerteeinheit können die verschiedenen Positionen des Tores bzw. des Schlittens auf der Linearachse detektiert werden. Daraufhin können von der Sicherheitssteuerung jeweils unterschiedliche Reaktionen ausgelöst werden.

In Weiterbildung der Erfindung ist die Kennung bzw. Kodierung in dem Betätigerelement veränderbar bzw. in das Betätigerelement einlernbar. Dadurch können die Betätigerelemente beliebig konfiguriert bzw. umkonfiguriert werden. Die Veränderung der Kodierung kann beispielsweise direkt über Schreibmittel des Sicherheitsbetätigungssensors erfolgen. Jedoch kann es auch vorgesehen sein, ein Konfigurationsgerät beispielsweise für den Anschluss an einen Personalcomputer (PC) bereitzustellen.

In Weiterbildung der Erfindung ist die Auswerteeinheit dazu ausgebildet, auf den Sicherheitsausgängen zyklisch Testpulse auszugeben. Mit Hilfe der Testpulse kann der Sicherheitsbetätigungssensor und/oder die Sicherheitssteuerung überprüfen, ob die Sicherheitsausgänge keinen Fehler aufweisen und daher fehlersicher sind. Beispielsweise können Querschlüsse zwischen den Sicherheitsausgängen oder Kurzschlüsse an den Sicherheitsausgängen zu Fehlern führen. Durch die Testpulse können derartige Fehler aufgedeckt werden. Die Testpulse haben hierzu ca. eine Breite von 100 µs bis 400 µs, wodurch das Betätigungssignal nur kurzzeitig unterbrochen wird, so dass das eigentliche Betätigungssignal nicht gestört wird. Im Falle eines Querschlusses oder Kurzschlusses wird der Testpuls gestört, wobei diese Störung des Testpulses zu einer Fehlerdetektion führt.

Der Sicherheitsbetätigungssensor und/oder die Sicherheitssteuerung sind bevorzugt zweikanalig redundant oder beispielsweise zweikanalig diversitär aufgebaut. Weiter beinhalten die Geräte Testfunktionen, die dazu ausgebildet sind, interne Bauteilversagen und externe Fehler in der Beschaltung wie oben erläutert zu erkennen, um eine überwachte Anlage bei Auftreten eines Fehlers in einen sicheren Zustand zu bringen. Bevorzugt ist der Sicherheitsbetätigungssensor und/oder die Sicherheitssteuerung fehlersicher im Sinne der Kategorie 3 oder höher gemäß der europäischen Norm EN 954-1, im Sinne von SIL2 gemäß der internationalen Norm IEC 61508 oder im Sinne vergleichbarer Vorschriften. Beispielsweise sind zwei redundante Signalverarbeitungskanäle in Form von zwei Mikrocontrollern vorgesehen.

Gemäß einer bevorzugten Ausführungsform der Erfindung ist der Sicherheitsbetätigungssensor ein RFID-System (Radio Frequency Identification), wobei das Sensorelement eine Antennenanordnung zur Kommunikation mit dem Betätigerelement ist und das Betätigerelement ein Transponder ist, wobei der Transponder einen Träger und wenigstens eine an dem Träger befestigte Spule zur Wechselwirkung mit der Antennenanordung des Sensorelements umfasst.

RFID-Systeme (Radio Frequency Identification) werden in Sender/Empfänger-Systemen zum automatischen und berührungslosen Identifizieren und/oder Lokalisieren von Objekten mit Radiowellen verwendet. Ein RFID-System umfasst typischerweise zunächst den Transponder (auch als "Tag" oder "Funketikett" bezeichnet), der eine Antenne umfasst und sich am oder im Betätigerelement befindet. Er umfasst in der Regel einen kennzeichnenden Code, der über die Antennenanordnung von einem Lesegerät des RFID-Systems (auch als "Transceiver" bezeichnet) abgefragt werden kann. Der Transceiver umfasst dazu die Antennenanordnung und einen Transceiverschaltkreis (z.B. der EM4095-Chip der Firma EM Microelectronics) zum Auslesen dieser Kennung von dem Transponder. Zum Auslesen der Kennung von dem Transponder erzeugt das Lesegerät typischerweise magnetische Wechselfelder, um Signale an den Transponder zu übertragen. Der Transponder ist dazu ausgebildet, nach Erhalt eines entsprechenden Signals vom Lesegerät ein Daten, insbesondere die Kennung, umfassendes Signal als Antwort an das Lesegerät zurückzusenden, welches dieses mit der Auswerteeinheit auswertet und weiterverarbeitet.

Bei RFID-Systemen geringer Reichweite (typischerweise von 20 mm Reichweite), erzeugt das Lesegerät magnetische Wechselfelder, die nicht nur zum Übertragen der Daten vorgesehen sind, sondern oftmals auch dazu dienen, den Transponder mit Energie zu versorgen.

Ein RFID-System hat den Vorteil, dass das Betätigungselement, also der Transponder keine eigene Stromversorgung benötigt und daher flexibel eingesetzt werden kann. Der Transponder bezieht seine Energie über Funkwellen bzw. Radiowellen aus dem RFID-System. Der Transponder wird über die Antennenanordnung des RFID-Systems angesprochen und antwortet dem RFID-System mit einer in dem Transponder abgespeicherten Information. Die vom Transponder des RFID-Systems übertragene Information wird von der Antennenanordnung empfangen und kann anschließend in der Auswerteeinheit ausgewertet werden. Die gespeicherte Information auf dem Transponder enthält mindestens eine Kennung, die den Transponder identifiziert.

Da die Erkennung des Transponders über Funkwellen erfolgt, ist das System sehr robust gegenüber Umwelteinflüssen. Daher kann das RFID-System mit dem Transponder in sehr rauen Umgebungen eingesetzt werden, beispielsweise in Industrieumgebungen, wo Schmierstoffe verwendet werden und es beispielsweise zu einem hohen Verschmutzungsgrad kommen kann.

Da die Erkennung des Transponders über Funkwellen erfolgt, ist im Unterschied zu einer optischen Lösung keine Sichtverbindung zwischen dem Sicherheitsbetätigungssensor und dem Betätigungselement notwendig. Daher kann der Sicherheitsbetätigungssensor und das Betätigungselement vollständig gekapselt werden, um diese vor schädlichen Umwelteinflüssen zu schützen.

In der Erfindung berechnet sich eine Anzahl m der unterscheidbaren Betätigerelemente aus der Anzahl n der Frequenzsignale mit unterschiedlichen Frequenzen nach der Formel m = n². Beispielsweise können mit drei unterschiedlichen Frequenzen, also drei unterschiedlichen Frequenzsignalen neun Betätigerelemente unterschieden werden. Mit lediglich zwei unterschiedlichen Frequenzen können sogar noch vier Betätigerelemente unterschieden werden. Mit vier unterschiedlichen Frequenzen können jedoch bereits sechzehn Betätigerelemente unterschieden werden. In Weiterbildung der Erfindung sind die Sicherheitsausgänge Schaltausgänge mit einer Schaltspannung von ca. 24 Volt. Schaltausgänge mit einer Schaltspannung von 24 V sind sehr robust und vielseitig einsetzbar. So kann mit den Schaltausgängen direkt ein Aktor, beispielsweise ein Schütz, direkt angesteuert werden oder beispielsweise eine direkte Verbindung mit einer Sicherheitssteuerung hergestellt werden.

Der Sicherheitsbetätigungssensor kann für eine sichere Positionierung eingesetzt werden, insbesondere bei Maschinen und Anwendungen der Intralogistik. Weiter kann der Sicherheitsbetätigungssensor für Zugangsanwendungen eingesetzt werden.
Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Sicherheitsbetätigungssensor mit einem Sensorelement;
- Figur 2: ein Tor mit Betätigerelementen;
- Figur 3: ein RFID-System;
- Figur 4: eine Tabelle mit Frequenzsignalen und Betätigerelementen;
- Figur 5: Frequenzsignale mit unterschiedlichen Frequenzen.

In den nachfolgenden Figuren sind identische Teile mit identischen Bezugszeichen versehen.

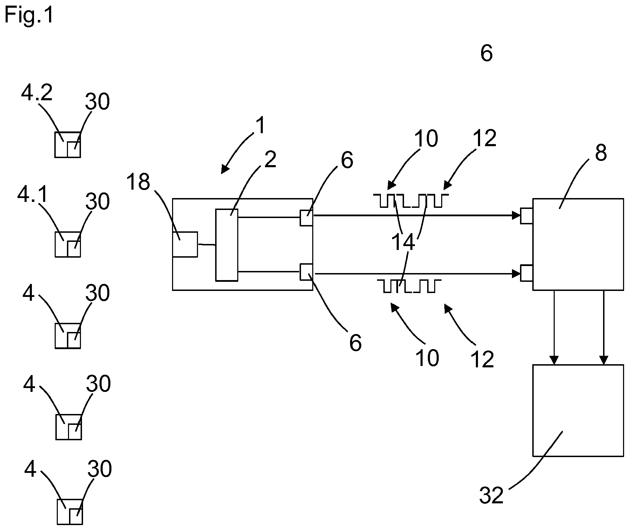

Figur 1 zeigt einen Sicherheitsbetätigungssensor 1 mit einem Sensorelement 18, mit einer Auswerteeinheit 2 und mit mindestens einem Betätigerelement 4, wobei der Sicherheitsbetätigungssensor 1 zwei Sicherheitsausgänge 6 aufweist, die mit einer Sicherheitssteuerung 8 verbunden sind, wobei die Auswerteeinheit 2 dazu ausgebildet ist, abhängig von der Detektion des Betätigerelements 4 durch das Sensorelement auf jedem der zwei Sicherheitsausgänge 6 jeweils ein Betätigungssignal 10 auszugeben, wobei die Auswerteeinheit dazu ausgebildet ist, unterschiedliche Betätigerelemente 4 zu detektieren, die Auswerteeinheit dazu ausgebildet ist, die unterschiedlichen Betätigerelemente 4 zu unterscheiden und die Auswerteeinheit 2 dazu ausgebildet ist, auf jedem der zwei Sicherheitsausgänge 6 abhängig von dem detektierten Betätigerelement 4 jeweils zusätzlich Frequenzsignale 12 mit Frequenzen auszugeben.

Die Auswerteeinheit 2 ist dazu ausgebildet, unterschiedliche Betätigerelemente 4 zu detektieren. Die Betätigerelemente 4 weisen beispielsweise jeweils eine individuelle Kennung 30 bzw. Kodierung auf, wodurch die Betätigerelemente 4 unterschieden werden können. Die Auswerteeinheit 2 kann die unterschiedlichen Kennungen 30 bzw. Kodierungen auswerten, und die erfassten Kennungen 30 bzw. Kodierungen den jeweiligen Betätigerelementen 4 zuordnen.

Die Sicherheitsausgänge 6 des Sicherheitsbetätigungssensors 1 sind mit Eingängen der Sicherheitssteuerung 8 verbunden. Die Sicherheitssteuerung 8 ist dazu ausgebildet, die Betätigungssignale 10 auszuwerten. Abhängig von den Betätigungssignalen 10 kann beispielsweise eine gefahrbringende Bewegung einer Maschine 32 gestoppt werden.

Weiter ist die Sicherheitssteuerung 8 dazu ausgebildet, die Frequenzsignale 12 auszuwerten. Aufgrund der unterschiedlichen Frequenzsignale 12 ist die Sicherheitssteuerung 8 in der Lage, die unterschiedlichen Betätigerelemente 4 zu erkennen und daraufhin unterschiedliche Reaktionen auszulösen. Beispielsweise kann bei der Erkennung eines ersten Betätigerelements 4.1 eine gefahrbringende Bewegung verlangsamt werden und bei der Erkennung eines zweiten Betätigerelements 4.2 die gefahrbringende Bewegung gestoppt werden. Die Kennung 30 bzw. die Kodierung ist in dem Betätigerelement 4 veränderbar bzw. in das Betätigerelement 4 einlernbar.

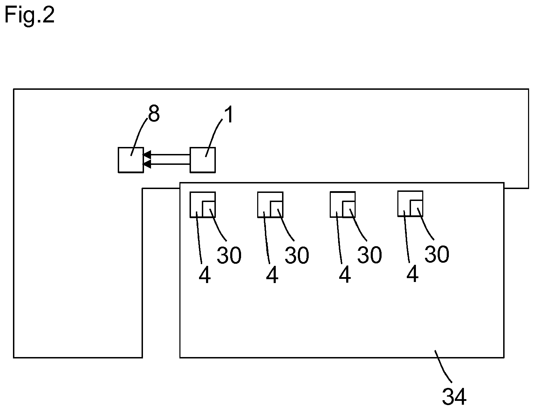

Gemäß Figur 2 sind die unterschiedlichen Betätigerelemente 4 an unterschiedlichen Positionen entlang eines Tores 34 bzw. einer Linearachse angeordnet. Von dem Sicherheitsbetätigungssensor 1 werden die unterschiedlichen Betätigerelemente 4 während des Öffnens oder Schließens des Tores 34 nacheinander detektiert. Aufgrund der Unterscheidung der Betätigerelemente 4 durch die Auswerteeinheit 2 können die verschiedenen Positionen des Tores 34 detektiert werden. Daraufhin können von der Sicherheitssteuerung 8 jeweils unterschiedliche Reaktionen ausgelöst werden.

Wie in Figur 1 dargestellt, ist die Auswerteeinheit 2 dazu ausgebildet, auf den Sicherheitsausgängen 6 zyklisch Testpulse 14 auszugeben. Mit Hilfe der Testpulse 14 kann der Sicherheitsbetätigungssensor 1 und/oder die Sicherheitssteuerung 8 überprüfen, ob die Sicherheitsausgänge 6 keinen Fehler aufweisen und daher fehlersicher sind. Beispielsweise können Querschlüsse zwischen den Sicherheitsausgängen 6 oder Kurzschlüsse an den Sicherheitsausgängen 6 zu Fehlern führen. Durch die Testpulse 14 können derartige Fehler aufgedeckt werden. Die Testpulse 14 haben hierzu ca. eine Breite von 100 µs bis 400 µs, wodurch das Betätigungssignal 10 nur kurzzeitig unterbrochen wird, so dass das eigentliche Betätigungssignal 10 nicht gestört wird. Im Falle eines Querschlusses oder Kurzschlusses wird der Testpuls 14 gestört bzw. verändert, wobei diese Störung bzw. Veränderung des Testpulses 14 zu einer Fehlerdetektion führt.

Der Sicherheitsbetätigungssensor 1 und/oder die Sicherheitssteuerung 8 sind bevorzugt zweikanalig redundant oder beispielsweise zweikanalig diversitär aufgebaut. Weiter beinhalten die Geräte Testfunktionen, die dazu ausgebildet sind, interne Bauteilversagen und externe Fehler in der Beschaltung zu erkennen, um eine überwachte Anlage bei Auftreten eines Fehlers in einen sicheren Zustand zu bringen.

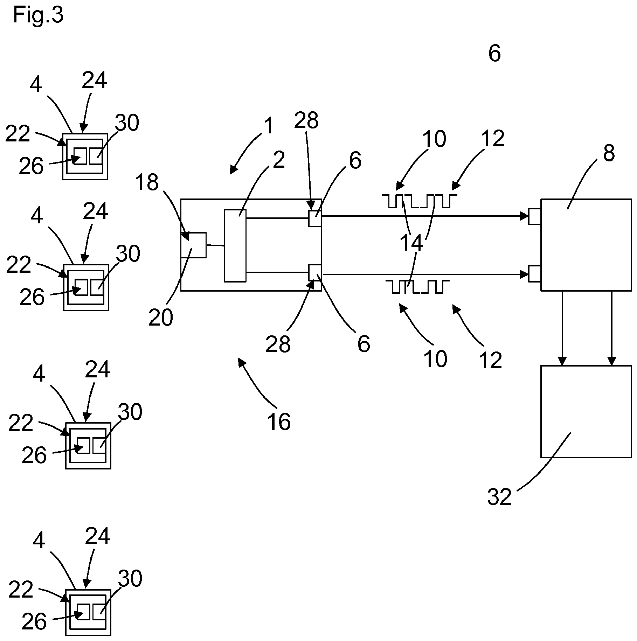

Gemäß Figur 3 ist der Sicherheitsbetätigungssensor 1 ein RFID-System (Radio Frequency Identification) 16, wobei das Sensorelement 18 eine Antennenanordnung 20 zur Kommunikation mit dem Betätigerelement 4 ist und das Betätigerelement 4 ein Transponder 22 ist, wobei der Transponder 22 einen Träger 24 und wenigstens eine an dem Träger 24 befestigte Spule 26 zur Wechselwirkung mit der Antennenanordung 20 des Sensorelements 18 umfasst.

Der Transponder 22 bezieht seine Energie über Funkwellen bzw. Radiowellen aus dem RFID-System 16. Der Transponder 22 wird über die Antennenanordnung 20 des RFID-Systems 16 angesprochen und antwortet dem RFID-System 16 mit einer in dem Transponder 22 abgespeicherten Information. Die vom Transponder 22 des RFID-Systems 16 übertragene Information wird von der Antennenanordnung 20 empfangen und kann anschließend in der Auswerteeinheit 2 ausgewertet werden. Die gespeicherte Information auf dem Transponder 22 enthält mindestens eine Kennung 30, die den Transponder 22 identifiziert.

Gemäß Figur 3 sind die Sicherheitsausgänge 6 Schaltausgänge 28 mit einer Schaltspannung von ca. 24 Volt. Schaltausgänge 28 mit einer Schaltspannung von 24 V sind sehr robust und vielseitig einsetzbar. So kann mit den Schaltausgängen 28 direkt ein Aktor, beispielsweise ein Schütz, direkt angesteuert werden oder beispielsweise eine direkte Verbindung mit einer Sicherheitssteuerung 8 hergestellt werden.

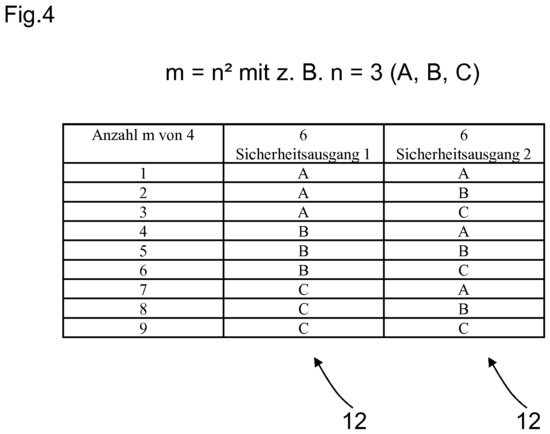

Gemäß der Tabelle in Figur 4 berechnet sich eine Anzahl m der unterscheidbaren Betätigerelemente 4 aus der Anzahl n der Frequenzsignale 12 mit unterschiedlichen Frequenzen nach der Formel m = n². Beispielsweise können mit drei unterschiedlichen Frequenzen A, B C, also drei unterschiedlichen Frequenzsignalen 12, neun Betätigerelemente 4 unterschieden werden, wie in Figur 4 dargestellt. Mit lediglich zwei unterschiedlichen Frequenzen können sogar noch vier Betätigerelemente 4 unterschieden werden. Mit vier unterschiedlichen Frequenzen können jedoch bereits sechzehn Betätigerelemente 4 unterschieden werden. Um den Sicherheitsbetätigungssensor besonders sicher auszuführen, werden auf den Sicherheitsausgängen jeweils nur unterschiedliche Frequenzen ausgegeben.

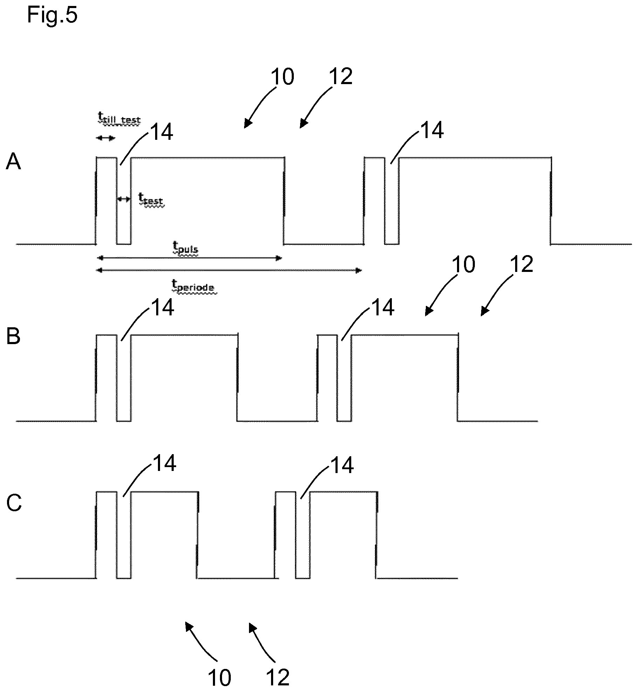

Figur 5 zeigt die Betätigungssignale 10 mit den Frequenzsignalen 12 und den enthaltenen Testpulsen 14 für die Frequenzen A, B und C.

### Bezugszeichen:

- 1: Sicherheitsbetätigungssensor
- 2: Auswerteeinheit
- 4: Betätigerelemente
- 4.1: erstes Betätigerelement
- 4.2: zweites Betätigerelement
- 6: Sicherheitsausgänge
- 8: Sicherheitssteuerung
- 10: Betätigungssignal
- 12: Frequenzsignale
- 14: Testpulse
- 16: RFID-System
- 18: Sensorelement
- 20: Antennenanordnung
- 22: Transponder
- 24: Träger
- 26: Spule
- 28: Schaltausgänge
- 30: Kennung
- 32: Maschine
- 34: Tor
- n: Anzahl der Frequenzsignale mit unterschiedlichen Frequenzen
- m: Anzahl der unterscheidbaren Betätigerelemente
- A: Frequenz
- B: Frequenz
- C: Frequenz

## Patentansprüche

1. Sicherheitsbetätigungssensor mit einem Sensorelement (18), mit einer Auswerteeinheit (2) und mit mindestens einem Betätigerelement (4), wobei der Sicherheitsbetätigungssensor (1) zwei Sicherheitsausgänge (6) aufweist, die mit einer Sicherheitssteuerung (8) verbunden sind,
wobei die Auswerteeinheit (2) dazu ausgebildet ist, abhängig von der Detektion des Betätigerelements (4) durch das Sensorelement, auf jedem der zwei Sicherheitsausgänge (6) jeweils ein Betätigungssignal (10) auszugeben,
wobei
die Auswerteeinheit dazu ausgebildet ist, unterschiedliche Betätigerelemente zu detektieren,
die Auswerteeinheit dazu ausgebildet ist, die unterschiedlichen Betätigerelemente zu unterscheiden und
die Auswerteeinheit (2) dazu ausgebildet ist, auf jedem der zwei Sicherheitsausgänge (6) abhängig von dem detektierten Betätigerelement (4) jeweils zusätzlich zu dem Betätigungssignal Frequenzsignale (12) mit Frequenzen (A, B, C) auszugeben, **dadurch gekennzeichnet, dass** sich eine Anzahl m der unterscheidbaren Betätigerelemente aus der Anzahl n der Frequenzsignale mit unterschiedlichen Frequenzen (A, B, C) nach der Formel m = n² berechnet.

2. Sicherheitsbetätigungssensor nach Anspruch 1, **dadurch gekennzeichnet, dass** die Betätigerelemente (4) aufgrund einer Kennung (30) unterscheibar sind und die Kennung (30) in dem Betätigerelement (4) veränderbar ist bzw. in das Betätigerelement (4) einlernbar ist.

3. Sicherheitsbetätigungssensor nach einem der vorhergehenden Ansprüche, **dadurch gekennzeichnet, dass** die Auswerteeinheit (2) dazu ausgebildet ist, auf den Sicherheitsausgängen (6) zyklisch Testpulse (14) auszugeben.

4. Sicherheitsbetätigungssensor nach einem der vorhergehenden Ansprüche, **dadurch gekennzeichnet, dass** der Sicherheitsbetätigungssensor (1) ein RFID-System (16) ist, wobei das Sensorelement (18) eine Antennenanordnung (20) zur Kommunikation mit dem Betätigerelement (4) ist, und das Betätigerelement (4) ein Transponder (22) ist, wobei der Transponder (22) einen Träger (24) und wenigstens eine an dem Träger (24) befestigte Spule (26) zur Wechselwirkung mit der Antennenanordung (20) des Sensorelements (18) umfasst.

5. Sicherheitsbetätigungssensor nach einem der vorhergehenden Ansprüche, **dadurch gekennzeichnet, dass** die Sicherheitsausgänge (6) Schaltausgänge (28) sind mit einer Schaltspannung von ca. 24 Volt.

## Claims

1. A safety actuation sensor having a sensor element (18), having an evaluation unit (2) and having at least one actuator element (4), wherein the safety actuation sensor (1) has two safety outputs (6) that are connected to a safety control (8);
wherein the evaluation unit (2) is configured to output a respective actuation signal (10) at each of the two safety outputs (6) in dependence on the detection of the actuator element (4) by the sensor element; and
wherein
the evaluation unit is configured to detect different actuator elements;
the evaluation unit is configured to distinguish the different actuator elements; and
the evaluation unit (2) is configured to output respective frequency signals (12) at frequencies (A, B, C) in addition to the actuation signal at each of the two safety outputs (6) in dependence on the detected actuator element (4), **characterized in that** a number m of the distinguishable actuator elements is calculated from the number n of the frequency signals having different frequencies (A, B, C) in accordance with the formula m = n².

2. A safety actuation sensor in accordance with claim 1, **characterized in that** the actuator elements (4) are distinguishable on the basis of an identifier (30) and the identifier (30) is variable in the actuator element (4) and/or can be taught to the actuator element (4).

3. A safety actuation sensor in accordance with one of the preceding claims, **characterized in that** the evaluation unit (2) is configured to output test pulses (14) cyclically at the safety outputs (6).

4. A safety actuation sensor in accordance with any one of the preceding claims,
**characterized in that** the safety actuation sensor (1) is an RFID system (16), with the sensor element (18) being an antenna arrangement (20) for communication with the actuator element (4), with the actuator element (4) being a transponder (22), and with the transponder (22) comprising a carrier (24) and at least one coil (26) fastened to the carrier (24) for interaction with the antenna arrangement (20) of the sensor element (18).

5. A safety actuation sensor in accordance with any one of the preceding claims, **characterized in that** the safety outputs (6) are switching outputs (28) having a switching voltage of approximately 24 volts.

## Revendications

1. Capteur d'actionnement de sécurité comportant un élément capteur (18), une unité d'évaluation (2) et au moins un élément actionneur (4), le capteur d'actionnement de sécurité (1) comprenant deux sorties de sécurité (6) qui sont connectées à une commande de sécurité (8),
dans lequel
l'unité d'évaluation (2) est réalisée pour émettre un signal d'actionnement respectif (10) sur chacune des deux sorties de sécurité (6) en fonction de la détection de l'élément actionneur (4) par l'élément capteur,
l'unité d'évaluation est réalisée pour détecter différents éléments actionneurs,
l'unité d'évaluation est réalisée pour distinguer les différents éléments actionneurs, et
l'unité d'évaluation (2) est réalisée pour émettre, en supplément au signal d'actionnement respectif, des signaux de fréquence (12) présentant les fréquences (A, B, C) sur chacune des deux sorties de sécurité (6) en fonction de l'élément actionneur détecté (4),
**caractérisé en ce que**
un nombre m d'éléments actionneurs distinguables se calcule à partir du nombre n de signaux de fréquence présentant différentes fréquences (A, B, C) selon la formule m = n².

2. Capteur d'actionnement de sécurité selon la revendication 1, **caractérisé en ce que** les éléments actionneurs (4) sont distinguables en raison d'un identifiant (30) et l'identifiant (30) dans l'élément actionneur (4) est variable ou peut être appris dans l'élément actionneur (4).

3. Capteur d'actionnement de sécurité selon l'une des revendications précédentes, **caractérisé en ce que** l'unité d'évaluation (2) est réalisée pour émettre cycliquement des impulsions de contrôle (14) sur les sorties de sécurité (6).

4. Capteur d'actionnement de sécurité selon l'une des revendications précédentes, **caractérisé en ce que** le capteur d'actionnement de sécurité (1) est un système RFID (16), l'élément capteur (18) est un agencement d'antenne (20) pour communiquer avec l'élément actionneur (4), et l'élément actionneur (4) est un transpondeur (22), le transpondeur (22) comprenant un support (24) et au moins une bobine (26) fixée sur le support (24) pour interagir avec l'agencement d'antenne (20) de l'élément capteur (18).

5. Capteur d'actionnement de sécurité selon l'une des revendications précédentes, **caractérisé en ce que** les sorties de sécurité (6) sont des sorties de commutation (28) d'une tension de commutation d'environ 24 volts.
